**Europäisches Patentamt**

**European Patent Office**

**Office européen des brevets**

(19)

(11) Publication number: **0 217 762**
A2

(12) # EUROPEAN PATENT APPLICATION

(21) Application number: **86830270.4**

(22) Date of filing: **01.10.86**

(51) Int. Cl.⁴: **B 60 R 16/02**

(30) Priority: **01.10.85 IT 2232085**

(43) Date of publication of application:
**08.04.87 Bulletin 87/15**

(84) Designated Contracting States:
**DE ES FR GB**

(71) Applicant: **CAVIS CAVETTI ISOLATI S.p.A.**
**Via Roma, 31**
**I-15023 Felizzano (Alessandria)(IT)**

(72) Inventor: **Codrino, Giuseppe**
**Via Stazione, 2**
**I-15028 - Quattordio (Alessandria)(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) **Decoder for the electrical supply of a vehicle.**

(57) Electrical service apparatus (1) for vehicles such as front light units, rear light units, windscreen wipers, seat control units etc.

This service apparatus is characterised by the fact that it is combined with a decoder unit (2) operable to permit its utilisation on computerised supply systems.

Fig.1

EP 0 217 762 A2

- 1 -

"Apparatus for motor vehicle electrical services, incorporating a decoder unit                    "

The present invention relates to apparatus for motor vehicle electrical services incorporating a decoder unit.

As is known modern day electronic technology permits all the electrical services of a motor vehicle to be actuated by means of a central processing unit.

To this end reference can be made to Italian Patent application No. 22318 A/85 filed 1.10.1985 by the same applicant.

In practice, by utilising such a computerised system, operation by the user of a specific switch is suitably coded and transmitted to the said central unit, which in dependence on an appropriate programme, transmits a given packet of pulses to the peripheral units.

Obviously, the various electrical services are actuated by first decoding the transmitted signal in such a way as to check if the signal itself relates to a given service.

The object of the present invention is to simplify the assembly operations of the various component parts, by providing motor vehicle electrical service apparatus (front light units, rear light units, windscreen wipers, seat control units etc.) incorporating a decoder unit.

Within the scope of the aforesaid object, a particular object of the present invention is that of providing motor vehicle electrical service apparatus which can be advantageously utilised unchanged on different vehicles.

The said object as well as the above-listed objects and others which will possibly become better apparent hereinbelow, are achieved according to the invention by electrical service apparatus (front light unit, rear light unit, windscreen wipers, seat control units etc.) for a vehicle, incorporating a decoder unit of known type to adapt it to be controlled directly by a computerised system for detection and control of the operations of the user on the electrical systems of the vehicles themselves.

Further characteristics and advantages of the vehicle electrical service apparatus which constitutes the subject of the present invention will be better understood with the aid of the following description of a preferred embodiment of the apparatus, illustrated purely by way of indication in the attached drawings, in which:

In Figure 1 there is schematically shown in perspective view a front light unit;

In Figure 2 there is shown a functional electrical diagram.

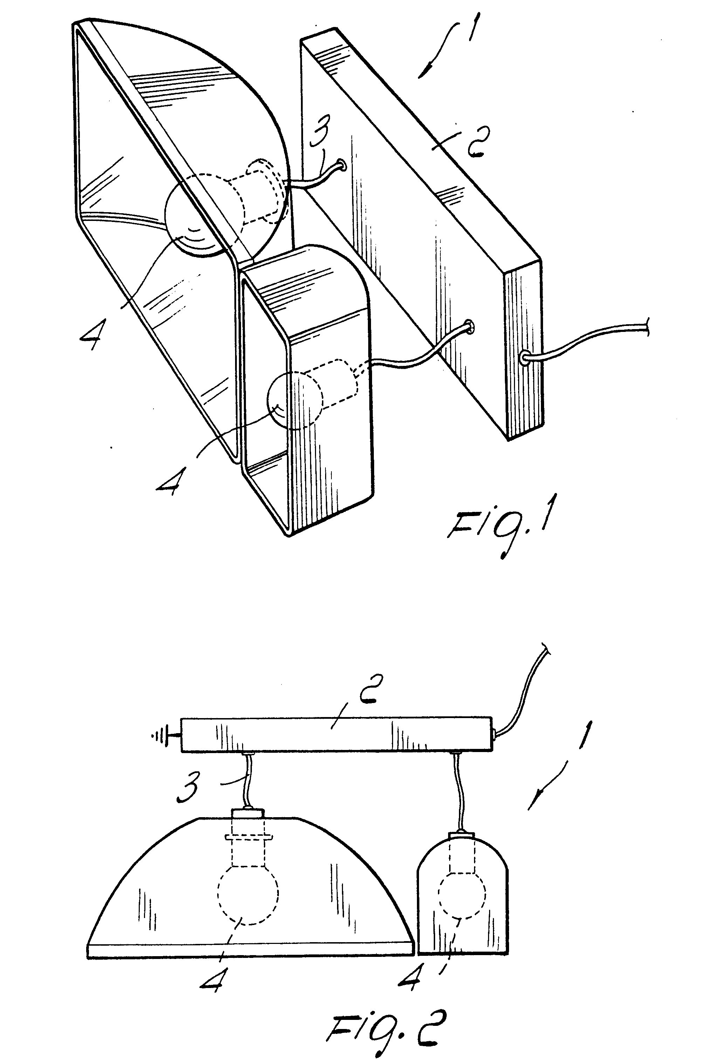

With particular reference to the numerical symbols of the said figures, the electrical service apparatus for vehicles, generally indicated with the reference numeral 1, is combined with a decoder unit 2.

The presence of this unit, in practice, makes it possible to eliminate, in the event of utilisation of the said computerised control systems, all the connection parts and associated expensive connections.

These latter, in fact, are reduced to a single electrical supply wire and one or two wires for the transmission of coded signals.

The decoder unit is preferably positioned close to the electrical service apparatus 1 and from it extend the various wires 3 for the individual utilisers which, in this specific case, are constituted by the individual lamps 4.

The electrical service apparatus thus constructed, consequently allows a significant advantage to be obtained in the unification of the connections and, above all in the reduction thereof with a significant increase in reliability.

From what has been explained hereinabove, and from observations of the attached drawing, the great functionality and practicality in use which characterises the electrical service apparatus for vehicles, having an integrated structure and constituting the subject of the present Patent of invention will be appreciated.

Obviously this service apparatus has been described and illustrated hereinabove purely by way of indicative, but non-limitative, example, and only for the purpose of demonstrating the practicability and general characteristics of the present invention so that all those variations and modifications within the scope of an expert in the art, and capable of being brought within the ambit of the above-explained inventive concept can be introduced thereto.

## CLAIMS

1. Apparatus for electrical services of vehicles, characterised by the fact that it includes a decoder unit (2) connected to a central control unit by means of one or two wires for the transmission of coded signals, and controlling the individual utilisers (4) of the electrical service apparatus (1).

2. Apparatus for electrical services of vehicles, according to claim 1, characterised by the fact that the said decoder unit (2) is positioned in proximity to the said individual utilisers (4).

0217762

Fig. 1

Fig. 2